**Europäisches Patentamt**

(19) **European Patent Office**

**Office européen des brevets**

(11) Numéro de publication: **0 275 491**
**B1**

(12) **FASCICULE DE BREVET EUROPEEN**

(45) Date de publication du fascicule du brevet: **30.01.91**

(51) Int. Cl.⁵: **B 65 H 3/08,** B 65 H 5/08, B 65 H 29/24, B 65 G 47/91

(21) Numéro de dépôt: **87118616.9**

(22) Date de dépôt: **15.12.87**

(54) **Tête de préhension de produits plats.**

(30) Priorité: **17.12.86 FR 8617688**

(43) Date de publication de la demande:
**27.07.88 Bulletin 88/30**

(45) Mention de la délivrance du brevet:
**30.01.91 Bulletin 91/05**

(84) Etats contractants désignés:
**DE FR GB IT NL**

(56) Documents cités:
**DE-B-1 103 355**
**FR-A-2 526 766**
**GB-A-2 026 432**
**US-A-3 853 345**
**US-A-4 553 892**

(73) Titulaire: **ALCATEL SATMAM**
**113 rue Jean-Marin Naudin**
**F-92220 Bagneux (FR)**

(72) Inventeur: **Haroutel, Jean-Claude**
**21, avenue du Panorama**
**F-91400 Orsay (FR)**
Inventeur: **Michel, Philippe**
**50, rue du Révérend Père Christian Gilbert**
**F-92600 Asnières (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention se rapporte aux têtes de préhension de produits plats uns à uns, en particulier de produits ou articles plats pouvant présenter une surface relativement importante.

D'une manière habituelle, les têtes de préhension de produits plats sont à ventouses montées à l'extrémité coudée d'un support tubulaire et reliées à une pompe à vide. La tête appliquée contre le produit à prélever fonctionne en créant une forte dépression sur une petite zone de la surface du produit qui ferme la ventouse, pour sa rétention contre la tête et son transfert à distance. Ce fonctionnement n'est pas satisfaisant lorsque le produit est de surface et de poids relativement importants.

En effet, dans ces conditions, la tête exige d'être centrée le plus parfaitement possible sur le produit et d'être mise très fortement en dépression. Son fonctionnement est en outre d'autant moins satisfaisant que la surface du produit à prélever est irrégulière et/ou poreuse. La tête ne permet pas non plus d'effectuer, de manière aisée, une réorientation du produit au cours de son transfert, une telle réorientation s'avérant parfois nécessaire pour faciliter le transfert de produits encombrants. De plus elle est de fonctionnement demeurant très bruyant et met oeuvre des moyens onéreux.

La présente invention a pour but de réaliser une tête de préhension de produits plats de structure compacte et évitant les inconvénients précités.

Elle a pour objet une tête de préhension de produits plats, caractérisée en ce qu'elle comporte une turbine fixée en bout d'un arbre d'un moteur dit moteur de turbine et rotative avec ledit arbre dans un embout lui-même montérotatif autour dudit arbre mais indépendamment de la rotation de celui-ci, ledit embout étant partiellement cloisonné transversalement audit arbre, à l'avant de ladite turbine, en définissant une première chambre plate ouverte latéralement et contenant la turbine, dite chambre aspirante, et une seconde chambre plate avant, communiquant avec ladite chambre aspirante, à travers une ouverture entre elles selon l'axe de la tubrine, et à face terminale ouverte dite face de préhension obturée par le produit à prélever, dite chambre de dépression, assurant la rétention du produit sur ladite face de préhension quand la turbine est entraînée en rotation.

Selon une autre caractéristique, ledit embout est fixé sur une couronne dentée montée autour dudit arbre du moteur de turbine mais non rotative avec lui, et dont la denture est couplée à un moto-réducteur de commande d'orientation dudit embout sur ledit arbre du moteur de turbine.

Les caractéristiques et avantages de la présente invention ressortiront de la description d'un mode particulier de réalisation donné à titre d'exemple et illustré dans les dessins ci-annexés. Dans ces dessins:

la figure 1 est une vue en coupe d'une tête de préhension de produits plats, selon l'invention,

la figure 2 est une vue de face de cette même tête de préhension,

la figure 3 est une vue partielle de dessus, avec arrachement partiel, de cette tête de préhension.

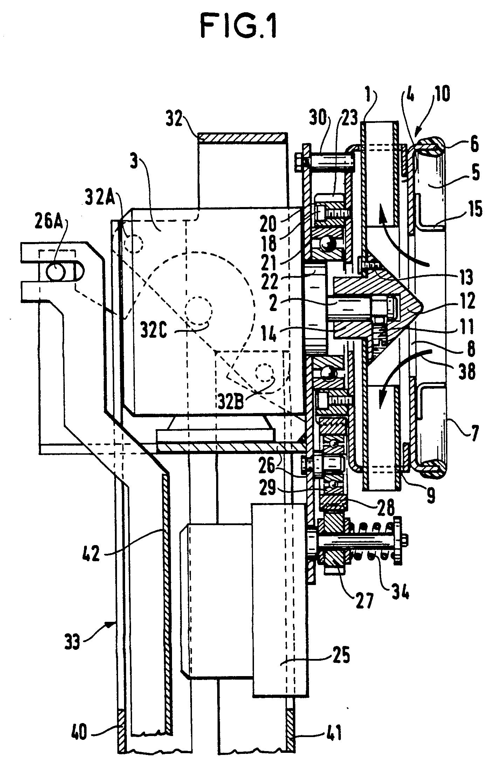

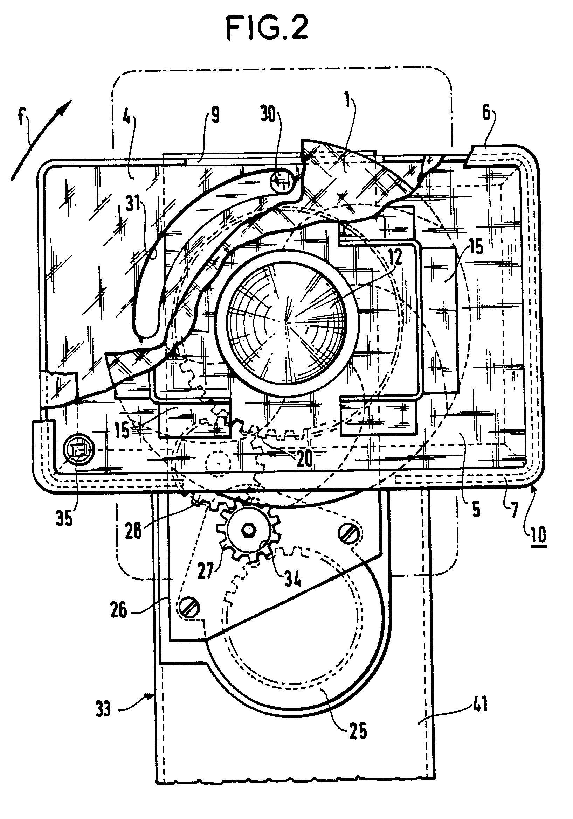

En regard de la figure 1 ou de la figure 2, on voit que la tête de préhension comporte une turbine 1 fixée en bout de l'arbre 2 d'un moteur d'entraînement 3, dit moteur de turbine. La turbine 1 est montée dans une première chambre plate 4, qui communique avec une seconde chambre plate 5 dit chambre avant, opposée au moteur 3.

Ces deux chambres plates 4 et 5 sont de section rectangulaire et ont même périphérie. La chambre avant 5 a sa face terminale ouverte, ayant un bourrelet d'étachéité 6 sur sa périphérie et délimitant la face de préhension 7. L'ouverture de communication 8 entre les deux chambres est prévue selon l'axe de la turbine et l'axe de son moteur. Des ouvertures 9 sont prévues latéralement sur la chambre 4, sensiblement sur la zone médiane de ses grandes parois latérales, la turbine étant légèrement saillante à travers ces ouvertures 9.

Les deux chambres 4 et 5 sont accolées et fixées l'une à l'autre, par exemple par points de soudure. Elles forment sur l'arbre du moteur 3 un embout terminal désigné par la référence globale 10, porté par le moteur mais libre en rotation par rapport à son arbre 2, dans lequel la turbine est rotative avec l'arbre 2. Cet embout forme une cage contenant la turbine, partiellement cloisonnée à l'avant de la turbine et ouverte à l'avant et latéralement sur la turbine.

Dans la figure 1, on voit que la turbine 1 est fixée par une vis 11 en bout de l'arbre 2. Une coiffe conique 12 montée dans la partie centrale de la turbine, et fixée sur la turbine par exemple par vis 13, cache la tête de vis et forme un cone d'entrée d'air dans la turbine. Cette coiffe définit aussi sur la turbine, à l'extérieur du côté du moteur 3, un manchon 14 de centrage de la turbine sur l'arbre 2.

Deux profilés en U 15 sont montés en regard l'un de l'autre dans la chambre avant 5. Sur la face de préhension 7, ils constituent deux butées pour les produits prélevés par la tête. Ils sont à bords rabattus fixés par points de soudure sur le fond de la chambre avant 5; ils assurent le maintien plat des produits sur l'embout de la tête de préhension.

L'embout 10 est fixé par vis 18 sur une couronne 20. Cette couronne est montée sur un roulement à billes 21 lui même monté sur le palier 22 du moteur 3. La couronne 20 et l'embout 10 sont ainsi libres en rotation par rapport à l'arbre 2 sur lequel ils sont centrés.

La couronne 20 est à denture périphérique 23 et est couplée à un moto-réducteur 25 de commande. Ce moto-réducteur 25 et le moteur 3 sont maintenus sur une pièce 26 support des moteurs. Un pignon de commande 27 sur l'arbre du moteur-réducteur et une couronne intermédiaire 28 montée sur un autre roulement à billes 29 porté par la pièce 26 assurent le couplage du moto-réducteur et de la couronne 20, pour l'entraînement en rotation de l'embout 10 autour de l'axe de la turbine 1, indépendamment de l'entraînement en rotation de cette dernière par le moteur de turbine 3.

Un ergot 30 et une fente arquée 31, l'un fixe et indépendant de l'embout et l'autre mobile avec l'embout, assurent le guidage en rotation de l'embout 10 et limitent à 90° cette rotation. Cette rotation possible sur 90° de l'embout permet son orientation ainsi que montré par la flèche f et la nouvelle position en pointillés prise par l'embout. Selon la réalisation illustrée, la fente 31 est formée sur le côté extérieur du fond de la chambre 4 et l'ergot porté par une branche de la pièce 26 support des moteurs. En regard de cette limitation à 90° de la rotation de l'embout, un limiteur de couple 34 est associé au pignon de commande 27 sur l'arbre du moto-réducteur 25.

Cette tête de préhension, à turbine 1 rotative dans l'embout 10 lui-même rotatif sur 90° pour l'orientation préférentielle de sa face de préhension, est montée par une pièce de liaison 32 au bout d'un support 33 d'entraînement de la tête. Cette pièce de liaison 32 est en forme d'étrier. Le support 33 est du type formant un support en paralle'logramme sur la tête de préhension.

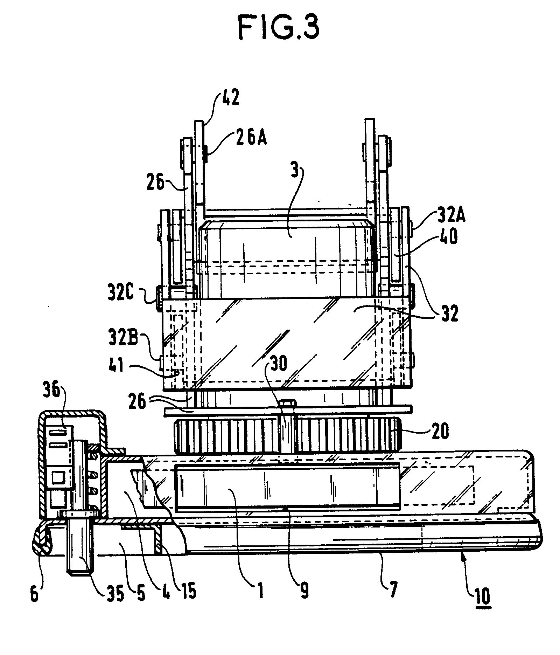

Cette tête de préhension est en outre équipée, ainsi que montré en particulier dans la figure 3, d'un circuit de détection d'application de la tête contre un produit à prélever. Ce circuit comporte un palpeur réalisé sous forme d'un doigt rétractable 35 monté latéralement dans l'embout 10 et saillant en position non rétractée sur la face de préhension 7 et un commutateur associé 36 monté en correspondance du doigt sur l'embout. Ce commutateur est commandé par le doigt 35 lorsque, par application ferme de la face de préhension 7 sur le produit à prélever, il est rétracté, pour alors déclencher la commande du moteur 3 de la turbine.

Dans la réalisation illustrée dans les figures 1 et 3, pour le montage de la tête de préhension sur le support 33, deux articulations 32A et 32B relient la pièce de liaison 32 aux deux bras longitudinaux 40 et 41, chacun de section de U, du support 33 et une articulation 32C relie la pièce de liaison 32 à des flasques appartenant à la pièce 26 support des moteurs et désignés par cette même référence 26. Ce même support 33 comporte en outre, associé à ses bras 40 et 41, un levier de commande 42 lié par une articulation 26A à la pièce 26 support des moteurs. Bien que non représenté on précise que le support 33 a ses bras et son levier également articulés à l'opposé de la tête, il est commandé en basculement autour de ses articulations opposées à la tête et en translation, par des moyens de commande appropriés couplés au levier 42 et aux bras.

En fonctionnement, dès que l'embout est étroitement fermé par le produit à prélever, la turbine est entraînée; la chambre 4 aspirante met la chambre avant 5 en dépression, en créant une circulation d'air de la chambre 5 vers les ouvertures 9, ainsi que représenté par les flèches 38 dans la figure 1, pour assurer la rétention du produit sur l'embout.

Le produit ainsi retenu peut être transféré à distance, avec réorientation sur l'embout, par rotation de 90° de celui-ci autour de l'axe de la turbine.

La chambre 5 crée une zone d'impact importante sur le produit pour sa rétention, les profilés 15 dans la chambre 5 le maintenant plan contre l'embout 10.

**Revendications**

1. Tête de préhension de produits plats, caractérisée en ce qu'elle comporte une turbine (1) fixée en bout d'un arbre (2) d'un moteur (3), dit moteur de turbine, et rotative avec ledit arbre dans un embout (10) lui-même monté rotatif autour dudit arbre (2) mais indépendamment de la rotation de celui-ci, ledit embout étant partiellement cloisonné transversalement à l'arbre, à l'avant de ladite turbine, en définissant une première chambre plate (4) ouverte latéralement et contenant la turbine, dite chambre aspirante, et une seconde chambre plate avant (5), communiquant avec ladite chambre aspirante, à travers une ouverture (8) enter elles et selon l'axe de la turbine, et à face terminale ouverte dite face de préhension (7) obturée par le produit à prélever, dite chambre de dépression, pour la rétention du produit sur ladite face de préhension quand la turbine est entraîné en rotation.

2. Tête selon la revendication 1, caractérisée en ce que ladite chambre avant (5) est équipée d'un bourrelet d'étanchéité (6) sur la périphérie de sa face de préhension (7).

3. Tête selon la revendication 2, caractérisée en ce qu'elle comporte un palpeur (35) sur sa face de préhension et un commutateur associé (36) actionné par le palpeur lorsque ladite face de préhension est obturée par le produit à prélever, commandant ledit moteur de turbine.

4. Tête selon la revendication 3, caractérisée en ce que ledit palpeur (35) est formé par un doigt saillant rétractable sur ladite face de préhension (7).

5. Tête selon l'une des revendications 1 à 4, caractérisée en ce que ledit embout (10) est fixé sur une couronne à denture périphérique (23), montée autour dudit arbre du moteur de turbine, mais non rotative avec lui, et dont la denture (23) assure son couplage à un moto-réducteur (25) de commande d'orientation dudit embout autour dudit arbre du moteur de turbine (3) et de l'axe de la turbine (1).

6. Tête selon la revendication 5, caractérisée en ce qu'il comporte des moyens de guidage (30, 31) dudit embout au cours de son orientation.

7. Tête selon la revendication 6, caractérisée en ce qu'il comporte des moyens de limitation (30, 31) de l'entraînement dudit embout.

8. Tête selon la revendication 7, caractérisée en ce que lesdits moyens de guidage et de limitation sont constituées par un ergot (30) engagé dans une fente (31), l'un sur l'embout et mobile avec lui et l'autre fixe sur une pièce (26) support dans ladite tête.

**Patentansprüche**

1. Kopf zum Ergreifen von flachen Gegenstäden, dadurch gekennzeichnet, daß er eine Turbine (1) aufweist, bei am Ende einer Welle (2) eines Motors (3), Turbinenmotor genannt, befestigt ist und die mit dieser Welle in einem Ansatzstück (10) dreht, das selbst um diese Welle (2) drehbar, aber unabhängig von deren Drehung montiert ist, wobei das Ansatzstück teilweise vor der Turbine quer zur Welle mit Trennwänden versehen ist, wodurch es eine erste flache Kammer (4), Saugkammer genannt, die seitlich offen ist und die Turbine enthält, und eine zweite vordere flache Kammer (5) definiert, Unterdruckkammer genannt, die über eine Öffnung (8) entlang der Turbinenachse mit der Saugkammer in Verbindung steht und eine offene Endfläche, Greiffläche (7) genannt, besitzt, die von dem zu greifenden Gegenstand verschlossen wird, zum Festhalten des Gegenstands auf der Greiffläche, wenn die Turbine in Drehung versetzt wird.

2. Kopf nach Anspruch 1, dadurch gekennzeichnet, daß die vordere Kammer (5) auf dem Umfang ihrer Greiffläche (7) mit einem Dichtungswulst (6) ausgerüstet ist.

3. Kopf nach Anspruch 2, dadurch gekennzeichnet, daß er einen Fühler (35) auf seiner Greiffläche und einen dazugehörigen Schalter (36) aufweist, der vom Fühler betätigt wird, wenn die Greiffläche durch den zu ergreifenden Gegenstand verschlossen ist, wodurch der Turbinenmotor gesteuert wird.

4. Kopf nach Anspruch 3, dadurch gekennzeichnet, daß der Fühler (35) von einem vorspringenden und zurückziehbaren Finger auf der Greiffläche (7) gebildet wird.

5. Kopf nach einem der Ansprüche 1 bis 4, dadurch gekennzeichnet, daß das Ansatzstück (10) auf einem Ring mit Umfangsverzahnung (23) befestigt ist, der um die Welle des Turbinenmotors herum angeordnet ist, aber nicht mit dieser dreht, und dessen Verzahnung (23) seine Kopplung an ein Schaltgetriebe (25) zur Steuerung der Ausrichtung des Ansatzstücks um die Welle des Turbinenmotors (3) und die Achse der Turbine (1) bewirkt.

6. Kopf nach Anspruch 5, dadurch gekennzeichnet, daß er Mittel (30, 31) zum Führen des Ansatzstücks während seiner Ausrichtung aufweist.

7. Kopf nach Anspruch 6, dadurch gekennzeichnet, daß er Begrenzungsmittel (30, 31) für den Antrieb des Ansatzstücks aufweist.

8. Kopf nach Anspruch 7, dadurch gekennzeichnet, daß die Führungs- und Begrenzungsmittel aus einem Stift (30) bestehen, der in einem Schlitz (31) eingeführt ist, wobei einer der beiden sich auf dem Ansatzstück befindet und mit ihm beweglich ist und der andere sich auf einem Trägerteil (26) im Kopf befindet.

**Claims**

1. A head for gripping flat objects, characterized in that it comprises a turbine (1) fixed to the end of a shaft (2) of a motor (3) called turbine motor and rotatable with said shaft in a terminator assembly (10) which is itself rotatable about said shaft (2) but independently of the rotation of the latter, said terminator assembly being partly partitioned transversally to said shaft, in front of said turbine, thus defining a first flat chamber (4), called suction chambre, which is open laterally and contains the turbine, and a second flat front chamber (5), called depression chamber, communicating with said suction chamber through an opening (8) along the axis of the turbine, and having an open end face called gripping face (7) closed by the object to be gripped, ensuring the hold of the object on said gripping face when the turbine is driven into rotation.

2. A head according to claim 1, characterized in that said front chamber (5) is equipped with a sealing bead (6) on the periphery of its gripping surface (7).

3. A head according to claim 2, characterized in that it comprises a feeler (35) on its gripping surface and an associated switch (36) activated by the feeler when said gripping surface is closed by the object to be seized, thereby controlling said turbine motor.

4. A head according to claim 3, characterized in that said feeler (35) is constituted by a protruding finger which can be retracted on said gripping surface (7).

5. A head according to one of claims 1 to 4, characterized in that said terminator assembly (10) is fixed on a ring with peripheral teeth (23), mounted around said shaft of the turbine motor, but not rotatable with it, and the toothing (23) of which ensures its coupling with a motor-gearbox unit (25) controlling the orientation of said terminator assembly around said shaft of the turbine motor (3) and the axis of the turbine (1).

6. A head according to claim 5, characterized in that it comprises means (30, 31) for guiding said terminator assembly during its orientation.

7. A head according to claim 6, characterized in that it comprises travel limiting means (30, 31) for said terminator assembly.

8. A head according to claim 7, characterized in that said guiding and limiting means are constituted by a peg (30) engaged into a slot (31), one on the terminator assembly and mobile therewith and the other fixed on a support piece (26) in said head.

# FIG.1

# FIG.2

# FIG.3